# EUROPEAN PATENT APPLICATION

(11) **EP 2 908 219 A1**
(43) Date of publication of application: **19.08.2015**
(21) Application number: 15152625.8
(22) Date of filing: 27.01.2015
(51) Int. Cl.: G06F 3/01, G06F 3/00, G06K 9/00

(54) **Gesture recognition apparatus and control method of gesture recognition apparatus**

(30) Priority: 13.03.2014 JP 2014050728; 12.03.2014 JP 2014048910; 12.03.2014 JP 2014048911; 14.02.2014 JP 2014027016
(71) Applicant: OMRON CORPORATION, Kyoto-shi, Kyoto 600-8530 (JP)
(72) Inventor: Matsunaga, Jumpei, Kyoto-shi, Kyoto 600-8530 (JP)
(74) Representative: Kilian Kilian & Partner

(57) **Abstract**

A gesture recognition apparatus acquiring a gesture performed by an operator and generating an instruction corresponding to the gesture, the gesture recognition apparatus comprises an imaging unit configured to capture an image of a person who performs a gesture; a posture determining unit configured to generate posture information representing a posture of the person who performs a gesture in a space, based on the captured image; a gesture acquiring unit configured to acquire a motion of an object part that performs the gesture from the capture image and to identify the gesture; and an instruction generating unit configured to generate an instruction corresponding to the gesture, wherein the gesture acquiring unit corrects the acquired motion of the object part, based on the posture information.

## Description

### BACKGROUND OF THE INVENTION

### Field of the Invention

The present invention relates to a gesture recognition apparatus that recognizes an input operation by a gesture.

### Description of the Related Art

Apparatuses that provide input to a computer or an electronic device using a gesture are becoming increasingly popular. The use of a gesture enables input to be intuitively performed to devices which are equipped with multiple functions but require complicated operations. In addition, a device can be operated even when it is inappropriate to operate the device by direct touch such as when hands are wet.

Recognition of a gesture is generally performed using an image captured by a camera. With such an apparatus, in order to accurately recognize a gesture, a user and the camera must directly face each other and, at the same time, the user must be standing upright. In other words, there is a problem that the user cannot change postures at will such as facing directions other than the direction of the camera and lying down.

Inventions that attempt to solve this problem include a gesture recognition apparatus described in Japanese Patent Application Laid-open No. 2000-149025.

With this gesture recognition apparatus, a feature amount independent of postures is extracted by generating a user coordinate system that is centered on a user and using the coordinate system to express motions of the user's hands and feet.

### SUMMARY OF THE INVENTION

With the invention described in Japanese Patent Application Laid-open No. 2000-149025, since positions of the hands and feet of the user in a three-dimensional space can be acquired, a gesture can be accurately recognized regardless of a posture of the user. However, acquiring positional information in a three-dimensional space requires complicated processes or configurations such as mounting sensors to the user's hands and feet or capturing an image of a marker using two or more cameras and estimating a spatial position based on a parallax and, consequently, causes a rise in equipment cost.

The present invention has been made in consideration of the problem described above and an object thereof is to provide a gesture recognition apparatus capable of accurately recognizing a gesture without being affected by a posture of an operator.

In order to solve the problems described above, a gesture recognition apparatus according to the present invention is configured to estimate a posture of an operator in a space and to correct a motion of an acquired gesture based on the posture.

Specifically, a gesture recognition apparatus according to the present invention is
a gesture recognition apparatus acquiring a gesture performed by an operator and generating an instruction corresponding to the gesture, the gesture recognition apparatus including: an imaging unit configured to capture an image of a person who performs a gesture; a posture determining unit configured to generate posture information representing a posture of the person who performs a gesture in a space, based on the captured image; a gesture acquiring unit configured to acquire a motion of an object part that performs the gesture from the capture image and to identify the gesture; and an instruction generating unit configured to generate an instruction corresponding to the gesture, wherein the gesture acquiring unit corrects the acquired motion of the object part, based on the posture information.

The imaging unit is a unit configured to capture a person who performs a gesture and is typically a camera. In addition, the gesture acquiring unit is a unit configured to acquire a motion of an object part from a capture image and to identify the gesture. An object part refers to a part of a user which is used to perform a gesture. While an object part is typically a human hand, a marker for gesture input or the like may be used instead. Alternatively, an object part may be an entire human body. A gesture performed by the user can be distinguished by tracking a position of an object part in an image. Moreover, the gesture acquiring unit may be configured to identify a gesture further based on a shape of an object part in addition to a motion of the object part.

Furthermore, the posture determining unit is a unit configured to detect a posture of the user in a space and to generate posture information. A posture refers to an orientation with respect to the imaging unit and is expressible by, for example, angles with respect to respective axes of X, Y, and Z. In other words, since how much the user is oblique with respect to the imaging unit can be expressed by posture information, it is possible to estimate how much an object part is oblique with respect to the imaging unit.
With the gesture recognition apparatus according to the present invention, the gesture acquiring unit corrects an acquired motion of an object part based on the posture information. This configuration enables a distance or a direction expressed by the user by moving the object part to be correctly recognized even if the user is not directly facing the imaging unit and is not standing upright.

In addition, the posture information may include information regarding a yaw angle of a person who performs a gesture with respect to the imaging unit, the gesture acquiring unit may be configured to correct an acquired horizontal movement amount of an object part based on the yaw angle, and the gesture acquiring unit may be configured to correct an acquired movement amount of an object part by a larger degree when the yaw angle is large as compared to when the yaw angle is small.

A yaw angle refers to a rotation angle with a vertical direction as an axis. When the yaw angle of the user with respect to the imaging unit is large, a movement distance of an object part that is moved in a horizontal direction is recognized as being shorter than reality when viewed from the imaging unit. In consideration thereof, by correcting a horizontal movement distance of the object part based on the yaw angle, a distance expressed by the user by moving the object part can be correctly recognized. Specifically, favorably, the larger the detected yaw angle (in other words, the greater the angle with respect to the imaging unit), the greater the increase in movement distance due to the correction.

In addition, the posture information may include information regarding a pitch angle of a person who performs a gesture with respect to the imaging unit, the gesture acquiring unit may be configured to correct an acquired vertical movement amount of an object part based on the pitch angle, and the gesture acquiring unit may be configured to correct an acquired movement amount of an object part by a larger degree when the pitch angle is large as compared to when the pitch angle is small.

A pitch angle refers to a rotation angle with a horizontal direction as an axis. When the pitch angle of the user with respect to the imaging unit is large, a movement distance of an object part that is moved in a vertical direction is recognized as being shorter than reality when viewed from the imaging unit. In consideration thereof, by correcting a vertical movement distance of the object part based on the pitch angle, a distance expressed by the user by moving the object part can be correctly recognized. Specifically, favorably, the larger the detected pitch angle (in other words, the greater the angle with respect to the imaging unit), the greater the increase in movement distance due to the correction.

In addition, the posture information may include information regarding a roll angle of a person who performs a gesture with respect to the imaging unit, the gesture acquiring unit may be configured to correct an acquired movement direction of an object part based on the roll angle, and the gesture acquiring unit may be configured to correct an acquired movement direction of an object part in a direction opposite to the roll angle.

A roll angle refers to a rotation angle with a front-rear direction as an axis. When the user is assuming a posture other than a vertical posture with respect to the imaging unit, a movement direction of an object part is recognized as being displaced. In consideration thereof, by correcting a movement direction of the object part based on the roll angle, a direction expressed by the user by moving the object part can be correctly recognized. More specifically, a movement direction of the object part is favorably corrected in a direction that is opposite to the detected roll angle.

Furthermore, the object part may be a human hand. When a person performs a gesture using a hand, a movement amount or a movement direction changes due to a posture of the person. However, by using the gesture recognition apparatus according to the present invention, such changes can be appropriately corrected.

Moreover, the present invention can be identified as a gesture recognition apparatus including at least a part of the units described above. The present invention can also be identified as a control method of the gesture recognition apparatus described above, a program that causes the gesture recognition apparatus described above to be operated, and a recording medium on which the program is recorded. The processes and units described above may be implemented in any combination insofar as technical contradictions do not occur.

According to the present invention, a gesture recognition apparatus capable of accurately recognizing a gesture without being affected by a posture of an operator can be provided.

### BRIEF DESCRIPTION OF THE DRAWINGS

FIG. 1 is a configuration diagram of a gesture recognition system according to a first embodiment;
FIGS. 2A and 2B are diagrams explaining a gesture and a motion of a pointer corresponding to the gesture;
FIGS. 3A to 3C are diagrams explaining postures of a user;
FIGS. 4A and 4B are diagrams explaining a yaw angle among a posture of a user in detail;
FIGS. 5A and 5B are diagrams explaining a pitch angle among a posture of a user in detail;
FIG. 6 is a diagram explaining a roll angle among a posture of a user in detail;
FIGS. 7A to 7C show examples of a correction value table according to the first embodiment;
FIG. 8 is a flow chart of a correcting process according to the first embodiment;
FIG. 9 is a flow chart of a gesture recognizing process according to the first embodiment;
FIG. 10 is a diagram representing a relationship between a screen and a user according to a second embodiment;
FIG. 11 shows an example of a correction value table according to the second embodiment;
FIG. 12 is a configuration diagram of a gesture recognition system according to a third embodiment; and
FIG. 13 shows an example of a gesture definition table according to the third embodiment.

### DESCRIPTION OF THE EMBODIMENTS

### First Embodiment

### System Configuration

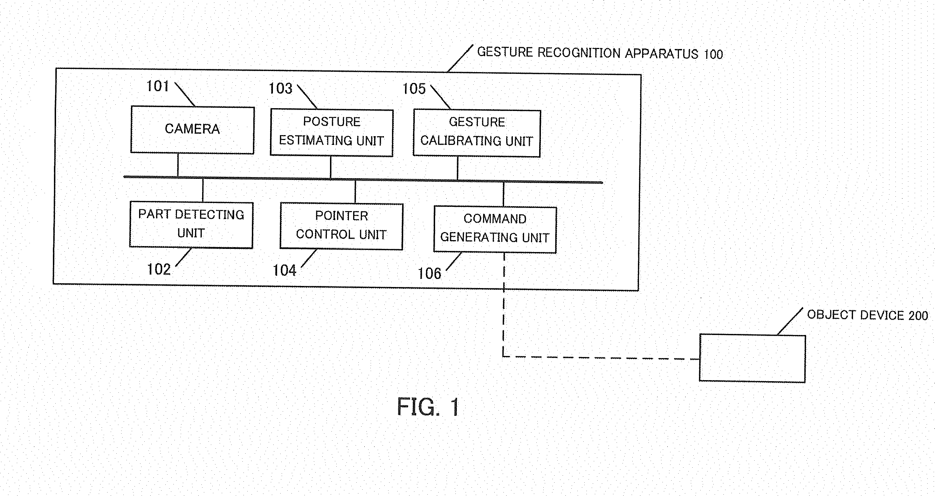

An outline of a gesture recognition system according to the first embodiment will be described with reference to FIG. 1 which is a system configuration diagram. The gesture recognition system according to the first embodiment is a system constituted by a gesture recognition apparatus 100 and an object device 200.

The object device 200 is a device which includes a screen (not shown) and which is used to perform an input operation through a pointer displayed on the screen. The object device 200 is capable of operating the pointer with a pointing device such as a mouse and moving the pointer according to a signal received from the gesture recognition apparatus 100.

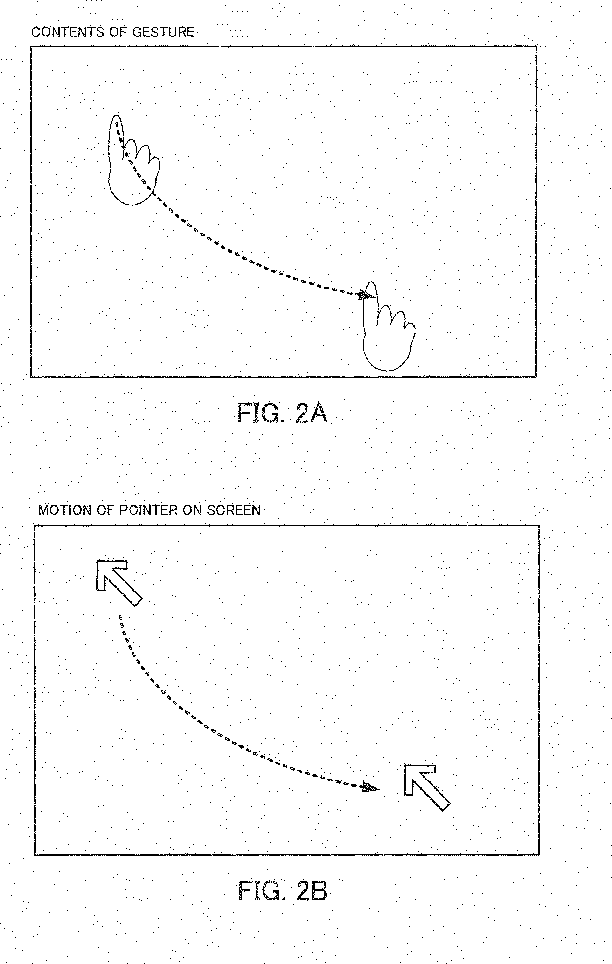

In addition, the gesture recognition apparatus 100 is an apparatus which recognizes a gesture performed by a user through a camera and which computes a movement destination of a pointer based on the recognized gesture and transmits an instruction for moving the pointer to the object device 200. For example, when the user performs a gesture such as that shown in FIG. 2A, a signal for moving the pointer is transmitted from the gesture recognition apparatus 100 to the object device 200 and the pointer moves as shown in FIG. 2B.

Moreover, the object device 200 may be any kind of device such as a television set, a video recorder, and a computer as long as a signal can be received from the gesture recognition apparatus 100 in a wired or wireless manner. In the present embodiment, it is assumed that the object device 200 is a television set and the gesture recognition apparatus 100 is an apparatus that is built into the television set. FIGS. 2A and 2B are both diagrams of a television screen as viewed from the user.

Next, the gesture recognition apparatus 100 will be described in detail with reference to FIG. 1.

The gesture recognition apparatus 100 includes a camera 101, a part detecting unit 102, a posture estimating unit 103, a pointer control unit 104, a gesture calibrating unit 105, and a command generating unit 106.

The camera 101 is a unit configured to externally acquire an image. In the present embodiment, the camera 101 is attached to an upper part of the front of a television screen and captures an image of a user positioned in front of a television set. The camera 101 may be a camera that acquires an RGB image or a camera that acquires a grayscale image or an infrared image. In addition, an image acquired by the camera 101 (hereinafter, a camera image) may be any kind of image as long as the image enables a motion of a gesture performed by the user to be acquired.

The part detecting unit 102 is a unit configured to detect a body part such as a face, body, or a hand of a person who performs a gesture from a camera image acquired by the camera 101. In the description of embodiments, a body part that performs a gesture will be referred to as an object part. In the present embodiment, it is assumed that the object part is a hand of a person who performs a gesture.

The posture estimating unit 103 is a unit configured to estimate a posture of a person who performs a gesture in a three-dimensional space based on positions of the face and body of the person as detected by the part detecting unit 102.

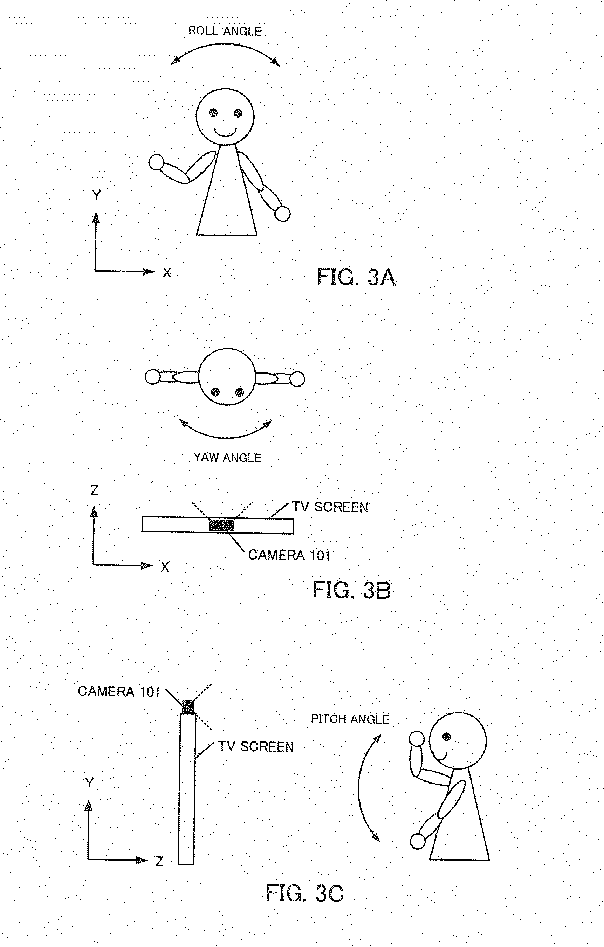

A posture to be estimated will now be described in detail. FIG. 3A is a diagram showing a user directly facing a screen provided on the object device 200 (a television screen) as viewed from the screen. In addition, FIG. 3B is a diagram in which the same user is viewed from above. Furthermore, FIG. 3C is a diagram in which the same user is viewed from the side. The posture estimating unit 103 acquires a rotation angle having a Z axis as a rotation axis (a roll angle), a rotation angle having a Y axis as a rotation axis (a yaw angle) and a rotation angle having an X axis as a rotation axis (a pitch angle). A method of acquiring the respective angles will be described later.

The pointer control unit 104 is a unit configured to determine a movement destination of the pointer based on an extracted gesture. Specifically, an object part detected by the part detecting unit 102 is tracked and a movement amount and a movement direction of the pointer are determined based on a movement amount and a movement direction of the object part. In addition, when doing so, the movement direction and the movement amount are corrected using a correction value acquired by the gesture calibrating unit 105 described below.

The gesture calibrating unit 105 is a unit configured to calculate a correction value that is used when the pointer control unit 104 determines a movement direction and a movement amount of the pointer. A specific example of correction will be described later.

The command generating unit 106 is a unit configured to generate a signal for moving the pointer to the movement destination determined by the pointer control unit 104 and to transmit the signal to the object device 200. The generated signal may be an electric signal, a signal modulated by radio, a pulse-modulated infrared signal, or the like as long as the signal instructs the object device 200 to move the pointer.

The gesture recognition apparatus 100 is a computer including a processor, a main storage device, and an auxiliary storage device. The respective units described above function when a program stored in the auxiliary storage device is loaded to the main storage device and executed by the processor (the processor, the main storage device, and the auxiliary storage device are not shown).

### Control method of pointer

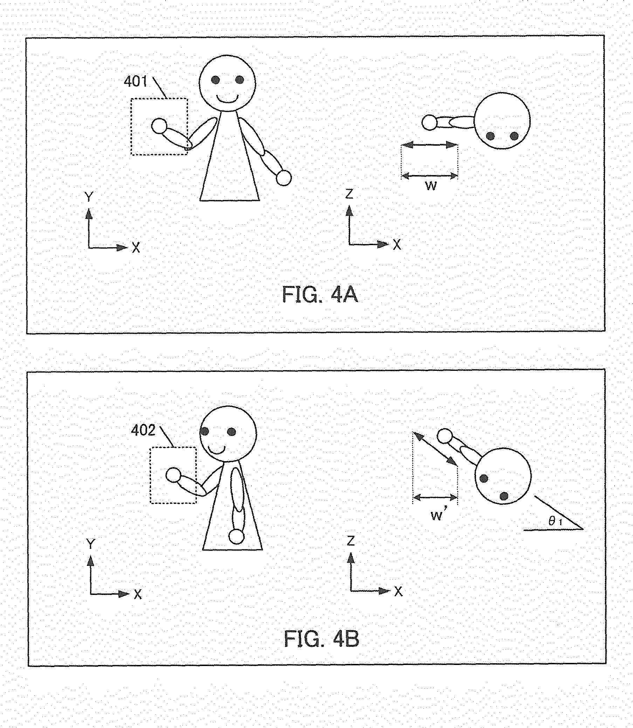

Next, a method of determining a movement destination of the pointer based on an extracted gesture will be described with reference to FIGS. 4A to 6. FIGS. 4A and 4B are diagrams of the user as viewed from the front and from above in a similar manner to FIGS. 3A to 3C. In this case, it is assumed that the user is to move the pointer by a motion of his or her right hand (palm). Moreover, in the following description, it is assumed that the term "hand" refers to a palm region.

First, a first problem according to the present embodiment will be described.

FIG. 4A is a diagram showing a case where the user is directly facing the screen and is standing upright. Reference numeral 401 denotes a movable range of the right hand. Meanwhile, FIG. 4B is a diagram showing the user standing upright in a state where the user is oblique with respect to the screen. In this case, the movable range of the right hand as viewed from the camera becomes narrower in the X direction as denoted by reference numeral 402. Specifically, when a width of a movable range is denoted by w, a width w' of the movable range when the user is facing obliquely by θ₁ degrees as compared to facing directly forward may be obtained as w/cosθ₁. Moreover, while the present example represents a case where an entire body including the hand is facing obliquely, even when only the body is facing obliquely and the hand is directly facing the screen, since a movable range of an arm becomes narrower, an movable range in the X direction becomes narrower than w.

In this case, a problem lies in that, when the pointer is moved simply based on a movement amount of the hand detected from an image without taking a posture of the user into consideration, a movement amount desired by the user cannot be obtained. Specifically, since the greater the angle θ₁, the narrower the width of the movable range of the right hand as viewed from the camera, a desired movement amount cannot be obtained unless a larger motion of the hand is made.

Next, a second problem according to the present embodiment will be described.

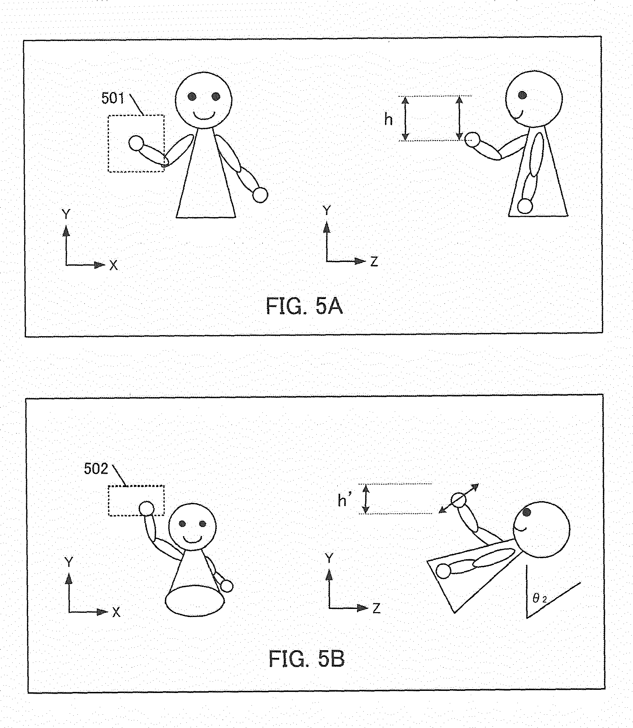

FIG. 5A is a diagram showing a case where the user is directly facing the screen and is standing upright in a similar manner to FIG. 4A. Reference numeral 501 denotes a movable range of the right hand. Meanwhile, FIG. 5B is a diagram showing the user lying down along a depth direction (Z direction). In this case, the movable range of the right hand as viewed from the camera becomes narrower in the Y direction as denoted by reference numeral 502. Specifically, when a height of a movable range is denoted by h, a height h' of the movable range when the user is lying down at an angle of θ₂ degrees as compared to standing upright may be obtained as h/cosθ₂. Moreover, while the present example represents a case where an entire body including the hand is lying down, even when only the body is lying down and the hand is held upright, since a movable range of an arm becomes narrower, an movable range in the Y direction becomes narrower than h.

In this case, the same problem as described above occurs. Specifically, since the greater the angle θ₂, the lower the height of the movable range of the right hand as viewed from the camera, a desired movement amount cannot be obtained unless a larger motion of the hand is made.

Next, a third problem according to the present embodiment will be described.

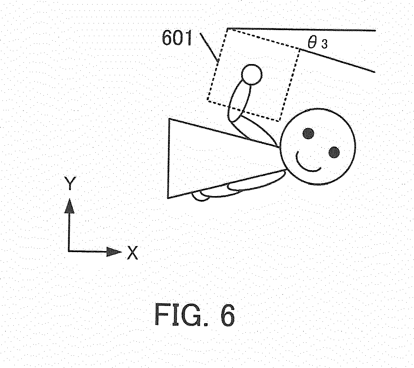

FIG. 6 shows an example of a state in which the user is lying down in a left-right direction while directly facing the screen. A problem that arises in such cases is that, even if the user thinks he or she is moving a hand along the screen, a slight angular deviation occurs. In the case of the example shown in FIG. 6, a deviation of θ₃ degrees has occurred (reference numeral 601). In other words, even though the user thinks he or she is moving a hand parallel to the screen, the pointer moves in a direction deviated by θ₃ degrees.

In order to solve these problems, the gesture recognition apparatus according to the first embodiment acquires a posture of the user in a space and corrects a movement amount and a movement direction of a pointer based on the posture.

First, a process performed by the part detecting unit 102 will be described.

The part detecting unit 102 first detects a region corresponding to a human hand from an acquired image. While there are various methods of detecting a human hand from an image, a detection method used in the first embodiment is not particularly limited. For example, a human hand may be detected by detecting a feature point and comparing the feature point with a model stored in advance or may be detected based on color information. Alternatively, a human hand may be detected based on contour information, finger edge information, or the like.

Next, a region corresponding to a body of a person is detected from the acquired image. While there are various methods of detecting a human body from an image, a detection method used in the first embodiment is not particularly limited. For example, a human body may be detected by acquiring color information and separating a region corresponding to a background from a region corresponding to a person. Alternatively, after detecting an arm, a corresponding region (a region determined to be connected to the arm) may be determined to be a body. Alternatively, the body and the face may be detected as a set. By first detecting the face that is readily discernible, an accuracy of detecting the body can be improved. Since known techniques can be used as a method of detecting a face in an image, a detailed description will be omitted.

Next, a process performed by the posture estimating unit 103 will be described.

The posture estimating unit 103 estimates a posture (a yaw angle, a pitch angle, and a roll angle) of a person who performs a gesture with respect to the camera 101 based on an image acquired by the camera 101 and regions respectively corresponding to the hand and the body of the person as detected by the part detecting unit 102. For example, estimation of a posture can be performed as follows.

### (1) Association of regions

First, a determination is made on whether a detected hand and a detected body belong to a same person and association is performed. For example, the association is performed using a model representing a shape of a human body (human body model). Specifically, using the body as a reference, movable ranges of a shoulder, both elbows, both wrists, and both hands may be estimated and a determination of a same person may be made only when the movable ranges are in natural positional relationships with one another.

Alternatively, when a face has already been detected, positional relationships between the face and the body and the face and a hand may be checked and a determination of a same person may be made only when the face, the body, and the hand are in natural positional relationships with one another.

### (2) Estimation of yaw angle

When association of the hand and the body with each other is successful, a yaw angle of the body with respect to the camera is estimated. A yaw angle can be estimated by, for example, detecting an orientation of the face of a person from an acquired image. Alternatively, after detecting a region corresponding to an arm, an angle may be estimated based on a positional relationship between the body and the arm. Alternatively, after estimating a distance of a hand in a depth direction based on a size of the body and a size of the hand, an angle may be estimated based on the distance. In this manner, a yaw angle can be estimated by an arbitrary method based on positional relationships between respective parts of a human body included in an image.

### (3) Estimation of pitch angle

When association of the hand and the body with each other is successful, a pitch angle of the body with respect to the camera is estimated. A pitch angle can be estimated by, for example, detecting an orientation of a face of a person from an acquired image. Alternatively, after detecting regions corresponding to an upper body and a lower body, an angle may be estimated based on a size ratio between the regions. In this manner, a pitch angle can be estimated by an arbitrary method based on positional relationships between respective parts of a human body included in an image.

### (4) Estimation of roll angle

Next, a roll angle of the body with respect to the camera is estimated. A roll angle can be obtained by detecting angles of respective parts of a human body included in an image. For example, the face and a hand may be detected from an acquired image and a deviation angle from a vertical direction may be calculated. Alternatively, when a position relationship of the face and the hand is known, an angle of the torso may be calculated.

Next, a process performed by the gesture calibrating unit 105 will be described.

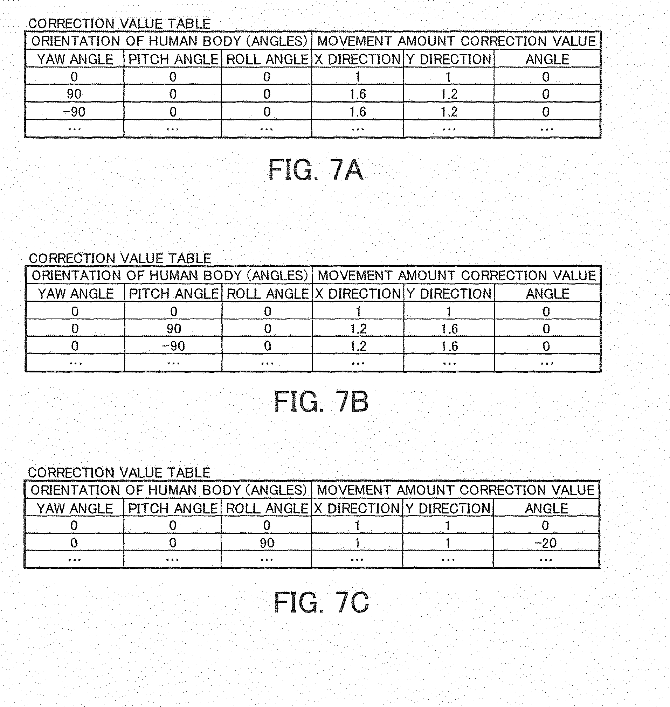

The three tables shown in FIGS. 7A to 7C are examples of tables (hereinafter, correction value tables) representing a relationship between angles (a yaw angle, a pitch angle, and a roll angle) of a human body with respect to a camera and values for correcting a movement amount of a pointer.

For example, in the example shown in FIG. 7A, it is defined that the movement amount of a pointer is to be multiplied by 1.6 in the X direction and by 1.2 in the Y direction when the human body faces end-on (90 degrees) with respect to the screen.

In addition, in the example shown in FIG. 7B, it is defined that the movement amount of a pointer is to be multiplied by 1.2 in the X direction and by 1.6 in the Y direction when the human body directly faces the screen while lying down (or lying face-down) at 90 degrees with respect to an upward direction.

Furthermore, in the example shown in FIG. 7C, it is defined that the movement direction of a pointer is to be corrected by -20 degrees when the human body directly faces the screen while lying down at 90 degrees in a lateral direction.

Moreover, while correction values of the movement amount and the movement direction may be obtained by calculation and stored in advance, since a degree of change of a movable range of a hand in accordance with a change in body orientation differs from individual to individual, correction value tables may be generated or updated by learning.

In addition, while values for performing correction are stored in a table format in the present example, any method may be used as long as correction values can be calculated from a yaw angle, a pitch angle, and a roll angle obtained by the posture estimating unit 103. For example, mathematical expressions may be stored and correction values may be calculated every time.

The pointer control unit 104 corrects the movement amount and the movement direction of the pointer using correction values determined as described above. For example, when a correction value corresponding to the X direction is 1.6 and a correction value corresponding to the Y direction is 1.2, among a movement amount of the pointer acquired based on a motion of the object part, an X-direction component is multiplied by 1.6 and a Y-direction component is multiplied by 1.2. In addition, when a correction value with respect to angle is -20 degrees, the movement direction of the pointer is rotated by -20 degrees.

Corrected values are transmitted to the command generating unit 106 and a pointer on the screen is moved.

### Processing flow chart

Next, a processing flow chart for realizing the functions described above will be described.

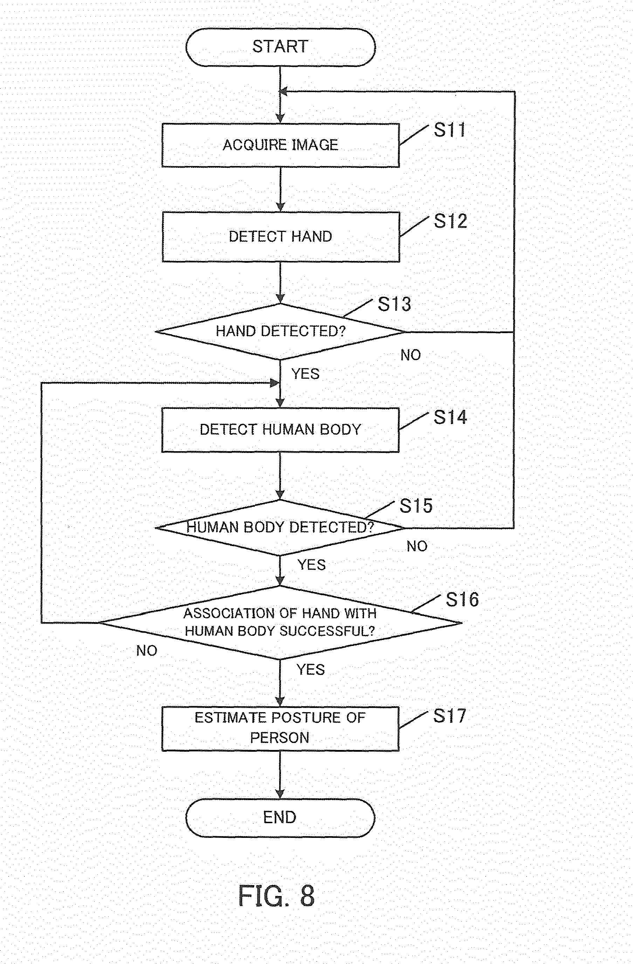

FIG. 8 is a flow chart of a process for estimating a posture of a person who performs a gesture. This process is repetitively executed at predetermined intervals as long as power of the gesture recognition apparatus 100 is turned on. Moreover, the process may be configured to be executed only when the gesture recognition apparatus 100 recognizes the presence of the user by a method such as image recognition.

First, the camera 101 acquires a camera image (step S11). In the present step, an RGB color image is acquired using a camera provided in an upper part of the front of the television screen.

Next, the part detecting unit 102 attempts to detect a hand from the acquired camera image (step S12). The detection of a hand can be performed by, for example, pattern matching. When there are a plurality of expected shapes of the hand, matching may be performed using a plurality of image templates. At this point, when a hand is not detected, a transition is made to step S11 after standing by for a prescribed period of time in step S13 and a similar process is repeated. When a hand is detected, a transition is made to step S14.

In step S14, the part detecting unit 102 attempts to detect a human body from the acquired camera image. At this point, when a body is not detected, a transition is made to step S11 after standing by for a prescribed period of time in step S15 and a similar process is repeated. When a body is detected, a transition is made to step S16.

Next, in step S16, the posture estimating unit 103 attempts to associate the detected hand and the detected body with each other. For example, a face may be detected and the association may be performed based on the face. Alternatively, the association may be simply performed by confirming whether the body and the hand are connected to each other by image analysis.

Next, in step S17, the posture estimating unit 103 obtains an orientation (a yaw angle, a pitch angle, and a roll angle with respect to the camera) of the body of the person who performs a gesture by the method described earlier. A method of acquiring an orientation of the body is not particularly limited as long as the orientation can be obtained based on information and positional relationships of body parts acquired from the image.

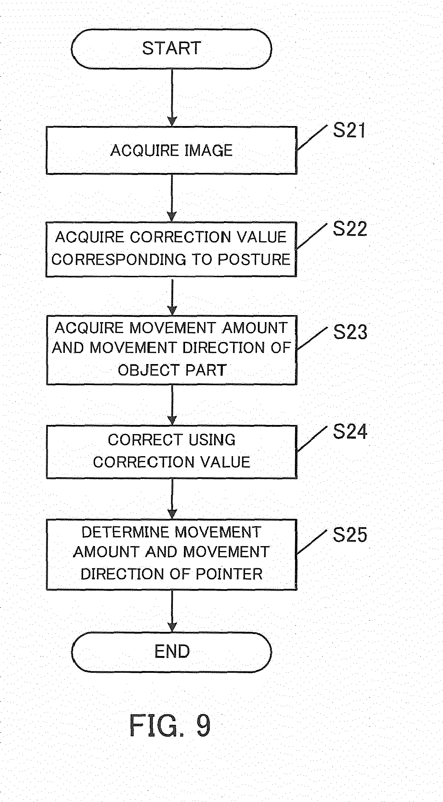

FIG. 9 is a flow chart of a process of recognizing a gesture performed by the user and moving a pointer displayed on the screen. The process is started at the same time as the process shown in FIG. 8 and is periodically executed.

First, the camera 101 acquires a camera image (step S21). Moreover, the camera image acquired in step S11 may be used.

Next, in step S22, the gesture calibrating unit 105 acquires the yaw angle, the pitch angle, and the roll angle acquired in step S17 from the posture estimating unit 103 and acquires corresponding correction values by referring to a correction value table.

Step S23 is a step in which the pointer control unit 104 determines a movement amount and a movement direction of the pointer. Specifically, a movement amount and a movement direction are determined by detecting a hand from the acquired image, extracting a feature point included in the hand, and tracking the feature point.

Next, the determined movement amount and movement direction are corrected by the correction values acquired in step S22 (step S24). Subsequently, the corrected movement direction and movement amount are transmitted to the command generating unit 106 (step S25). As a result, the pointer is moved on the screen of the object device 200 by an instruction generated by the command generating unit 106.

As described above, the gesture recognition apparatus according to the first embodiment corrects a movement amount and a movement direction when moving a pointer based on an orientation of a user with reference to a television screen. Accordingly, even if a person who performs a gesture is not directly facing the screen, the pointer can be moved by an amount desired by the user. In addition, even if a person who performs a gesture is not standing upright, the pointer can be moved in a desired direction.

### Second Embodiment

In the first embodiment, a case where a television screen on which a pointer is displayed and a camera that captures an image of a user are facing a same direction has been described. In contrast, the second embodiment is an embodiment in which a camera that captures an image of a user is installed so as to face a different direction from that of a screen. A configuration of a gesture recognition system according to the second embodiment is similar to that of the first embodiment with the exception of the points described below.

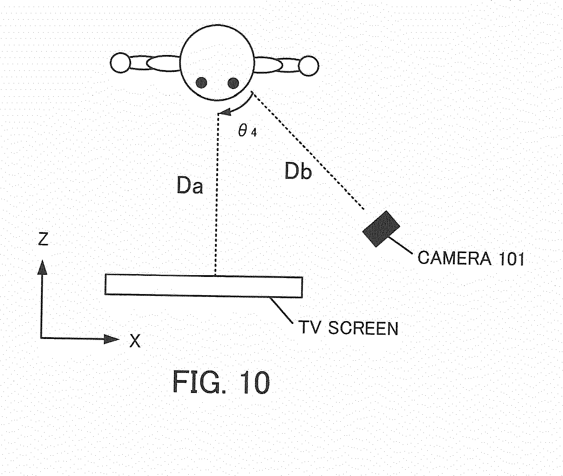

In the gesture recognition system according to the second embodiment, a camera 101 is arranged at a position rotated by an angle θ₄ instead of at a same position as a television screen, as shown in FIG. 10. In other words, an image captured by the camera 101 is always an image of a state in which the user has rotated clockwise by θ₄. Even in this state, a movement amount and a movement direction of a pointer can be corrected in a similar manner to the first embodiment. However, when a distance between the user and the camera is not the same as a distance between a screen and the user, a movement distance of a pointer may sometimes be erroneously recognized.

In order to address the above, in the second embodiment, a movement amount and a movement direction of a pointer are corrected using a correction value that takes an arrangement position of a camera into consideration.

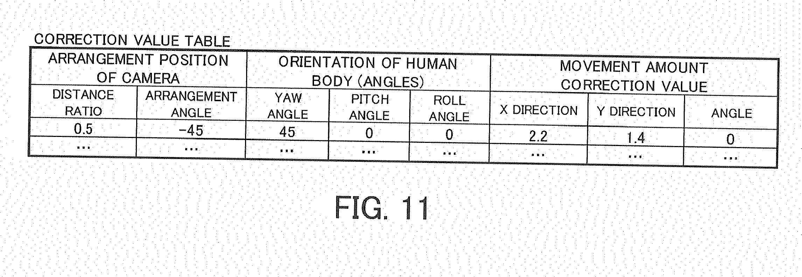

FIG. 11 shows an example of a correction value table according to the second embodiment. In the second embodiment, a "distance ratio" and an "arrangement angle" are added as fields representing an arrangement position of a camera. A distance ratio refers to a ratio between a distance from a screen to a user and a distance from the user to a camera. In addition, an arrangement angle refers to an angle formed between a line connecting the screen and the user and a line connecting the user and the camera.

Since a positional relationship among the user, the television screen, and the camera can be represented by the two fields, by providing appropriate correction values, the movement amount and the movement direction of a pointer can be appropriately corrected in a similar manner to the first embodiment.

### Third Embodiment

The third embodiment is an embodiment in which, instead of moving a pointer based on a motion of a hand performed by a user, a command corresponding to the motion of the hand is generated and transmitted to an object device 200.

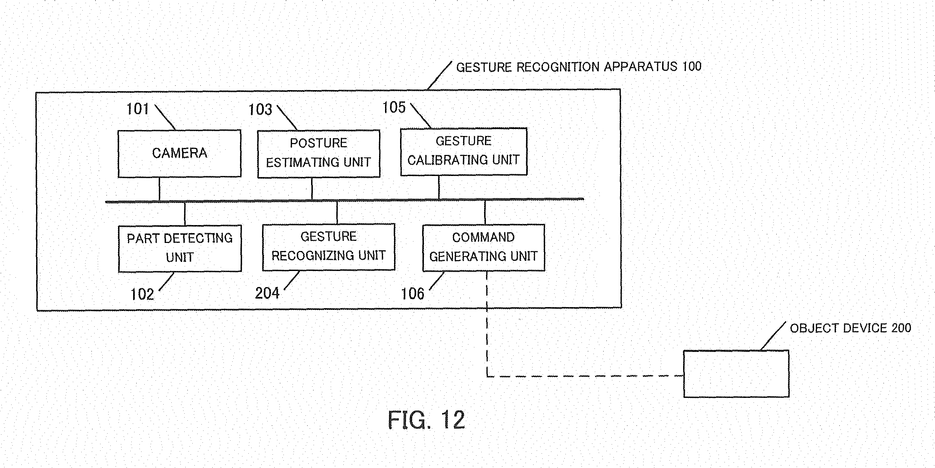

FIG. 12 shows a configuration of a gesture recognition system according to a third embodiment. A gesture recognition apparatus 100 according to the third embodiment differs from the first embodiment in that a gesture recognizing unit 204 is arranged in place of the pointer control unit 104.

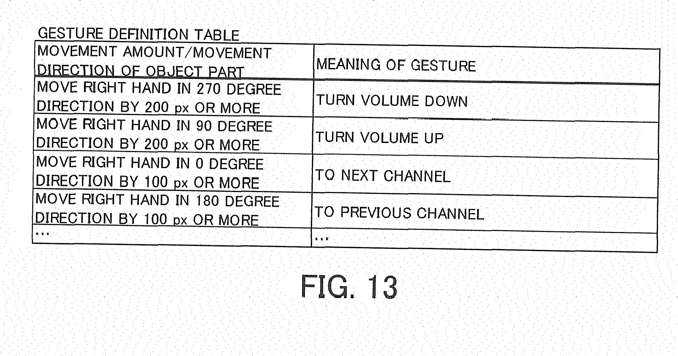

The gesture recognizing unit 204 is a unit configured to track an object part detected by a part detecting unit 102 and to identify a gesture based on a movement amount and a movement direction of the object part. Specifically, after correcting the movement amount and the movement direction of the object part using a correction value identified by the gesture calibrating unit 105, a corresponding gesture is identified. FIG. 13 shows an example of a table (gesture definition table) which associates a "movement amount and movement direction of the object part (after correction) " and a "meaning of a gesture" with each other. The gesture recognizing unit 204 uses the gesture definition table to recognize a gesture which the user is attempting to express and generates a corresponding command through the command generating unit 106.

While the gesture recognition apparatus according to the third embodiment executes the process shown in FIG. 9 in a similar manner to the first embodiment, the gesture recognition apparatus according to the third embodiment differs from the first embodiment in that, instead of moving a pointer in step S25, (1) the gesture recognizing unit 204 recognizes a gesture based on a movement amount and a movement direction of an object part after correction and (2) the command generating unit 106 generates a command corresponding to the gesture and transmits the command to the object device 200.

As described above, according to the third embodiment, a gesture recognition apparatus can be provided which enables input of a plurality of commands by appropriately using a plurality of gestures in addition to moving a pointer.

### Modifications

It is to be understood that the descriptions of the respective embodiments merely present examples of the present invention and, as such, the present invention can be implemented by appropriately modifying or combining the embodiments without departing from the spirit and the scope of the invention.

For example, a captured image of the user need not necessarily be acquired by a camera and, for example, may be an image which is generated by a distance sensor and which represents a distance distribution (distance image). Alternatively, a combination of a distance sensor and a camera or the like may be adopted.

In addition, while an entire hand (palm region) is set as an object part in the description of the embodiments, the object part may be a finger, an arm, or an entire human body. Alternatively, the object part may be a marker for inputting a gesture or the like. Furthermore, the object part may be any body part such as an eye as long as the object part is movable. The gesture recognition apparatus according to the present invention can also be applied to an apparatus for performing gesture input with a line of sight. In addition, a configuration may be adopted in which a gesture is recognized based on a shape of an object part in addition to a motion of the object part.

Furthermore, since a movement amount of an object part acquired by the gesture recognition apparatus changes in accordance with a distance between a user and the apparatus, a configuration may be adopted in which a movement amount of a pointer is further corrected in accordance with a distance between the gesture recognition apparatus and the user. For example, the distance between the gesture recognition apparatus and the user may be estimated based on a size of an object part (or a person) included in an image or may be acquired by an independent sensor.

In addition, while the posture estimating unit 103 estimates a yaw angle, a pitch angle, and a roll angle of a user with respect to an imaging apparatus in the description of the respective embodiments, for example, when a posture of the user can be assumed such as when the user is seated inside a vehicle, a posture estimating process may be omitted and a fixed value may be used instead.

### LIST OF REFERENCE NUMERALS

- 100:: Gesture recognition apparatus
- 101:: Camera
- 102:: Part detecting unit
- 103:: Posture estimating unit
- 104:: Pointer control unit
- 105:: Gesture calibrating unit
- 106:: Command generating unit
- 200:: Object device
- 204:: Gesture recognizing unit

## Claims

1. A gesture recognition apparatus acquiring a gesture performed by an operator and generating an instruction corresponding to the gesture,
the gesture recognition apparatus comprising:
an imaging unit configured to capture an image of a person who performs a gesture;
a posture determining unit configured to generate posture information representing a posture of the person who performs a gesture in a space, based on the captured image;
a gesture acquiring unit configured to acquire a motion of an object part that performs the gesture from the capture image and to identify the gesture; and
an instruction generating unit configured to generate an instruction corresponding to the gesture, wherein
the gesture acquiring unit corrects the acquired motion of the object part, based on the posture information.

2. The gesture recognition apparatus according to claim 1, wherein
the posture information includes information regarding a yaw angle of a person who performs a gesture with respect to the imaging unit, and
the gesture acquiring unit is configured to correct an acquired horizontal movement amount of an object part, based on the yaw angle.

3. The gesture recognition apparatus according to claim 2, wherein
the gesture acquiring unit is configured to correct an acquired movement amount of an object part by a larger degree when the yaw angle is large as compared to when the yaw angle is small.

4. The gesture recognition apparatus according to claim 1, wherein
the posture information includes information regarding a pitch angle of a person who performs a gesture with respect to the imaging unit, and
the gesture acquiring unit is configured to correct an acquired vertical movement amount of an object part, based on the pitch angle.

5. The gesture recognition apparatus according to claim 4, wherein
the gesture acquiring unit is configured to correct an acquired movement amount of an object part by a larger degree when the pitch angle is large as compared to when the pitch angle is small.

6. The gesture recognition apparatus according to claim 1, wherein
the posture information includes information regarding a roll angle of a person who performs a gesture with respect to the imaging unit, and
the gesture acquiring unit is configured to correct an acquired movement direction of an object part, based on the roll angle.

7. The gesture recognition apparatus according to claim 6, wherein
the gesture acquiring unit is configured to correct an acquired movement direction of an object part in a direction opposite to the roll angle.

8. The gesture recognition apparatus according to any one of the claims 1 to 7, wherein
the object part is a human hand.

9. A control method of a gesture recognition apparatus acquiring a gesture performed by an operator and generating an instruction corresponding to the gesture,
the control method comprising:
capturing an image of a person who performs a gesture;
generating posture information representing a posture of the person who performs a gesture in a space, based on the captured image;
acquiring a motion of an object part that performs the gesture from the capture image and identifying the gesture; and
generating an instruction corresponding to the gesture, wherein
in the acquiring step, the acquired motion of the object part is corrected, based on the posture information.

10. A non-transitory computer readable storing medium recording a computer program for causing a computer to perform the respective steps of the control method of a gesture recognition apparatus according to claim 9.
